# EUROPEAN PATENT SPECIFICATION

(11) **EP 0 919 437 B1**
(45) Date of publication and mention of the grant of the patent: **22.01.2003**
(21) Application number: 98112782.2
(22) Date of filing: 09.07.1998
(51) Int. Cl.: B60R 16/02, B60R 25/10, G08B 3/10, B60Q 5/00

(54) **Multifunction electronic siren for vehicles**
Elektronische Mehrzwecksirene für Fahrzeuge
Sirène électronique à fonctions multiples pour des véhicules

(30) Priority: 26.11.1997 IT RE970059 U
(43) Date of publication of application: 02.06.1999
(73) Proprietor: Meta System S.p.A., 42100 Reggio Emilia (IT)
(72) Inventor: Simonazzi, Giuseppe, 42100 Reggio Emilia (IT)
(74) Representative: Lecce, Giovanni

(56) References cited:
- GB-A- 1 565 525
- US-A- 3 882 275
- US-A- 4 065 767
- US-A- 5 557 257
- ADLER U.: "Automotive Handbook" 15 September 1993 , ROBERT BOSCH GMBH , STUTTGART, GERMANY XP002097038 * page 692, column 1, line 12 - line 15 *
- ADLER U.: "Automotive Handbook" 15 September 1993 , ROBERT BOSCH GMBH , STUTTGART, GERMANY XP002097039 * page 776 - page 778 *

## Description

The invention relates to a multifunction electronic siren for vehicles, substantially constituted by one only acoustic device which, suitably connected and provided with an alarm switching-case. can operate as a conventional compulsory acoustic signal (horn) during the usual utilisation of motor-vehicles, and as burglar, break-in alarm system and the like, during garage and/or parking staying.

The invention concerns a multifunction electronic siren suitable for motor-vehicles in general, comprising:
- a loudspeaker;
- an electronic circuit connected to and activating said loudspeaker , and
- a horn control, at least one alarm switch device, and a level or shifting sensor, each connected to said electronic circuit,
wherein said electronic circuit is programmed to generate either a frequency reproducing on the loudspeaker the sound of an electromechanical transducer, when activated by the horn control, or a frequency reproducing on the same loudspeaker the sound of alarm signalling the break-in, when activated by the alarm switch device and/or by the level or shifting sensor.

As is known, the laws provides for all motor-vehicles to be equipped with an acoustic signal device (horn) located on the steering-wheel that can be activated, in case of need, by driving users. It is also known that almost all motor-vehicles are at present equipped with burglar, break-in alarm systems and the like, comprising a siren connected to a switching-case, that can emit acoustic signals.

In particular, the alarm systems normally applied to vehicles are constituted by push-buttons or the like, located near doors, the engine hood, the trunk rack, and that can signal to a switching-case any forcing attempt and/or undesired opening. Other devices are constituted by sensors located in the inside of the cockpit, that can signal to the switching-case any break-in attempt. Still other ones are constituted by anti-lifting devices (commonly called "levels") that can transmit to the switching-case an alarm stimulus whenever a change in the inclination of vehicle is sensed, in order to prevent wheel thefts or thefts of vehicles stolen with breakdown cranes and the like

In any case, all the alarm devices adopted at present are connected, through a switching-case, to at least an acoustic signal device.

From what has been expounded hereinabove it can be inferred that the present vehicles are provided with at least two independent acoustic systems, utilised for different purposes, with an obvious waste of material, space and manpower costs.

Object of the present invention is to obviate the above drawbacks. The invention, as is characterised by the claims, solves the problem by means of a multifunction electronic siren for vehicles through which the following results are obtained: one only siren is provided with a dedicated electronics wherein work frequency can be modified to exactly reproduce the sound of an electromechanical horn; the feeding of said electronics or of a possible microcontrol can be shared with different alarm signal devices; the wiring of the alarm systems, such as those of alarm feeding or signal can be shared by the different devices; in particular, wires can be unified by having the signals of the various devices travelling therein with different codings, and the system provided with decoders, suitable to activate or deactivate the various parts of the wiring concerned.

The advantages achieved by the present invention lie essentially in that it allows to obtain substantial savings in material and the overall dimensions of the systems, reduction in control and/or maintenance operations, overall wiring simplification, reduction in installation and control times, reduction in manpower costs and increase in production power.

The invention will be now described in detail according to a particular embodiment expounded only by way of non limiting example, with reference to the attached drawing, wherein:

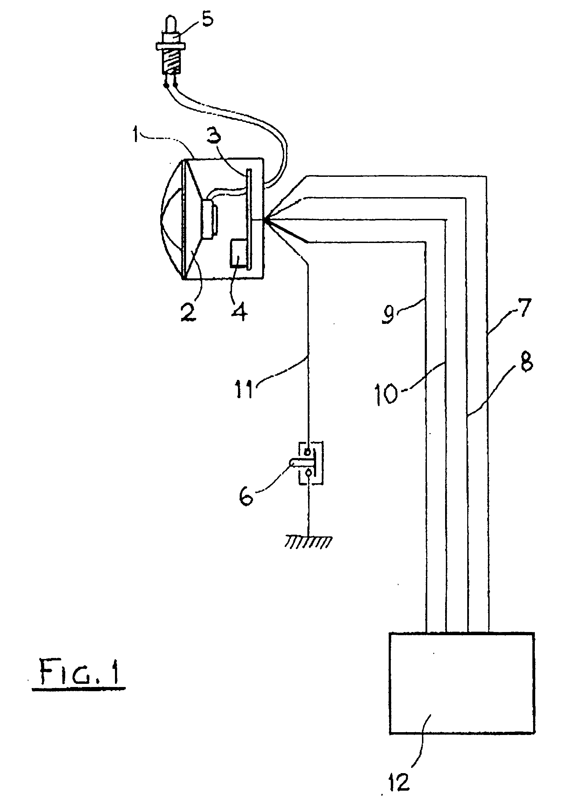

Figure 1 is the general scheme of the device in one of the simplest versions of the same, comprising one only multifunction siren, with independent controls for the activation of alarms and horn, and with unified feedings and alarm signals.

The figure shows a multifunction siren for vehicles utilised for an elementary installation made up by one only acoustic signal device associated to a level alarm device and a horn control on the steering-wheel.

Siren (2) and a shifting sensor (4) are housed in one only container (1).

The whole conditioning electronics of the system is mounted on a printed circuit (3) which is also contained and protected within container (1). The same printed circuit (3) also receives the signals coming from another alarm switch-device (5) positioned nearby, for instance applied to the same adequately siren-bearing shaped stirrup (2), whose function is to signal possible attempts at opening the engine hood. It is anyhow obvious that said switch (5), or several switches (5) may be located also elsewhere, such as for instance in correspondence of the doors and/or trunk rack hood, or they may be connected to the same electronic board (3) to send it the alarm signals for the possible forcing attempts of the internal spaces.

Wire (7) is the feeding positive, wire (8) is the feeding negative, wire (9) is the siren alarm control wire (1) and wire (10) is the alarm outlet wire for the switching-case (12), coming from either level (4) or push-button (5). Through another dedicated wire (11) the control of the horn of the same vehicle is connected to the same siren (2), coupled to said level (4) and push-button (5) sensors. In case of horn activation, the internal electronics (3) is programmed to generate a frequency such as to exactly reproduce on the loudspeaker of siren (2) the characteristic sound of said electromechanical transducer. In these conditions, the device works exactly as a conventional electromechanical horn.

Instead, if the activation is through the alarm control (9) coming from the switching-case (12), siren (2) works as alarm warning with its characteristic modulated sound, possibly diversified according to the destination country.

Vice-versa, any stimulus coming from the push-button sensor (5) or the level sensor (4) is processed and sent to the switching-case (12) which, if inserted, provides to signalling the break-in that is being attempted by activating siren (2) through wire (9).

Alternatively, the switching-case (12)/siren (2) communication is realisable by means of a coded system and siren (2) may be so conditioned as to be able to recognise whether the switching-case is activated or deactivated.

In case of an activated switching-case, the signals coming from the push-button sensor (5) and the level sensor (4) can directly activate the alarm by means of loudspeaker (2) without having to go to and return from the switching-case (12).

Using a more advanced technology, all the different signals may travel along one only wire, such as possibly the one (7) of the feeding positive, adopting different codes for the various functions, being understood that the main innovative concept of the invention is the adoption of one only device to realise several functions, exploiting the same mechanics and part of the common electronics.

Even though the present invention has been described and illustrated according to an elementary embodiment, expounded only by way of non limiting example, it will be apparent to those skilled in the art that many changes in configuration, type, number and function of the sensors adopted may be applied, without departing from its scope and object.

## Claims

1. A multifunction electronic siren suitable for motor-vehicles in general, comprising:
- a loudspeaker (2);
- an electronic circuit (3) connected to and activating said loudspeaker (2), and
- a horn control (6), at least one alarm switch device (5), and a level or shifting sensor (4), each connected to said electronic circuit (3),
**characterised in that** said electronic circuit (3) is programmed to generate either a frequency reproducing on the loudspeaker (2) the sound of an electromechanical transducer, when activated by the horn control (6), or a frequency reproducing on the same loudspeaker (2) the sound of alarm signalling the break-in, when activated by the alarm switch device (5) and/or by the level or shifting sensor (4).

2. The multifunction electronic siren according to claim 1, **characterised in that** the loudspeaker (2), the level or shifting sensor (4) and the electronic circuit (3) are housed in a container (1).

3. The multifunction electronic siren according to claim 1 or 2, **characterised in that** the at least one alarm switch device (5) and the level or shifting sensor (4) are connected to the loudspeaker (2) through a switching case (12).

4. The multifunction electronic siren according to claim 3, **characterised in that** the switching case (12) receives any stimulus coming from the at least one alarm switch device (5) and/or from the level or shifting sensor (4) and provides to signalling the break-in and to activating the loudspeaker (2).

5. The multifunction electronic siren according to anyone of the preceding claims 3 and 4, **characterised in that** the switching case (12) is connected to the loudspeaker (2) by a positive feeding wire (7), a negative feeding wire (8), a siren alarm control wire (9) and alarm outlet wire (11).

6. The multifunction electronic siren according to anyone of the preceding claims 3 and 4, **characterised in that** the switching case (12) is connected to the loudspeaker (2) by a coded system.

7. The multifunction electronic siren according to anyone of the preceding claims 3 and 4, **characterised in that** the switching case (12) is connected to the loudspeaker (2) by a single wire (9) by using a different code for each function.

8. The multifunction electronic siren according to claim 6, **characterised in that** the single wire is the positive feeding wire (7).

## Patentansprüche

1. Multifunktionale elektronische Sirene, insbesondere für Kraftfahrzeuge, umfassend
- einen Lautsprecher (2),
- eine mit dem Lautsprecher (2) verbundene und ihn aktivierende elektronische Schaltung (3), und
- eine Steuerung (6) für eine Hupe, mindestens einen Alarmschalter (5) und einen Niveau- bzw. Schaltsensor (4), die jeweils mit der elektronischen Schaltung (3) verbunden sind,
**dadurch gekennzeichnet, dass**
die elektronische Schaltung (3) programmiert ist, entweder eine Frequenz zu erzeugen, die den Ton eines elektromechanischen Umsetzers am Lautsprecher (2) wiedergibt, wenn die elektronische Schaltung (3) durch die Steuerung (6) für die Hupe aktiviert wird, oder eine Frequenz zu erzeugen, die den Einbruch signalisierenden Alarmton an demselben Lautsprecher (2) wiedergibt, wenn die elektronische Schaltung (3) durch den Alarmschalter (5) und/oder durch den Niveau- bzw. Schaltsensor (4) aktiviert wird.

2. Multifunktionale elektronische Sirene nach Anspruch 1, **dadurch gekennzeichnet, dass** der Lautsprecher (2), der Niveau- bzw. Schaltsensor (4) und die elektronische Schaltung (3) in einem Behälter (1) unterbracht sind.

3. Multifunktionale elektronische Sirene nach Anspruch 1 oder 2, **dadurch gekennzeichnet, dass** mindestens ein Alarmschalter (5) und der Niveau- bzw. Schaltsensor (4) durch einen Schaltkasten (12) mit dem Lautsprecher (2) verbunden sind.

4. Multifunktionale elektronische Sirene nach Anspruch 3, **dadurch gekennzeichnet, dass** der Schaltkasten (12) jedes von mindestens einen Alarmschalter (5) und/oder von dem Niveau- bzw. Schaltsensor (4) herkommenden Signal empfängt und für das Einbruchssignal und das Aktivieren des Lautsprechers (2) sorgt,

5. Multifunktionale elektronische Sirene nach Anspruch 3 oder 4, **dadurch gekennzeichnet, dass** der Schaltkasten (12) durch ein positives Versorgungskabel (7), ein negatives Versorgungskabel (8), ein Sirenenalarmsteuerungskabel (9) und ein Alarmansgangakabel (11) mit dem Lautsprecher (2) verbunden ist.

6. Multifunktionale elektronische Sirene nach Anspruch 3 oder 4, **dadurch gekennzeichnet, dass** der Schaltkasten (12) über ein verschlüsseltes System mit dem Lautsprecher (2) verbunden ist.

7. Multifunktionale elektronische Sirene nach Anspruch 3 oder 4, **dadurch gekennzeichnet, dass** der Schaltkasten (12) durch ein einziges Kabel (9) mit dem Lautsprecher (2) verbunden ist, wobei je ein verschiedener Code für jede Punktion benutzt wird.

8. Multifunktionale elektronische Sirene nach Anspruch 6, **dadurch gekennzeichnet, dass** das einzige Kabel das positive Versorgungskabel (7) ist.

## Revendications

1. Sirène électronique à fonctions multiples convenant à des véhicules à moteur en général, comportant :
- un haut-parleur (2) ;
- un circuit électronique (3) connecté audit haut-parleur (2), et activant ce dernier, et
- une commande (6) de pavillon, au moins un dispositif (5) de commutation d'alarme et un capteur (4) de niveau ou de décalage, connecté chacun audit circuit électronique (3),
**caractérisée en ce que** ledit circuit électronique (3) est programmé de façon à générer soit une fréquence reproduisant sur le haut-parleur (2) le son d'un transducteur électromécanique, lorsqu'il est activé par la commande (6) de pavillon, soit une fréquence reproduisant sur le même haut-parleur (2) le son d'une alarme signalant l'effraction, lorsqu'il est activé par le dispositif (5) de commutation d'alarme et/ou par le capteur (4) de niveau ou de décalage.

2. Sirène électronique à fonctions multiples selon la revendication 1, caractérisée on ce que le haut-parleur (2), le capteur (4) de niveau ou de décalage et le circuit électronique (3) sont logés dans un boîtier (1).

3. Sirêne électronique à fonctions multiples selon la revendication 1 ou 2, **caractérisée en ce que** le, au moins un, dispositif de commutation d'alarme (5) et le capteur (4) de niveau on de décalage sont connectés au haut-parleur (2) par l'intermédiaire d'un boîtier (12) de commutation.

4. Sirène électronique à fonctions multiples salon la revendication 3, **caractérisée en ce que** le boîtier (12) de commutation reçoit un signe quelconque provenant du, au moins, dispositif de commutation d'alarme (5) et/ou du capteur (4) de niveau ou de décalage et signale l'effraction et active le haut-parleur (2).

5. Sirène électronique à fonctions multiples selon l'une quelconque des revendications précédentes 3 et 4, **caractérisée en ce que** le boîtier (12) de commutation est connecté au haut-parleur (2) par un fil (7) d'alimentation positive, un fil (8) d'alimentation négative, un fil (9) de commande d'alarme de la sirène et un fil (11) de sortie d'alarme.

6. Sirène électronique à fonctions multiples selon l'une quelconque des revendications précédentes 3 et 4, **caractérisée en ce que** le boîtier (12) de commutation est connecté au haut-parleur (2) par un système codé.

7. Sirène électronique à fonctions multiples selon l'une quelconque des revendications précédentes 3 et 4, **caractérisée en ce que** le boîtier (12) de commutation est connecté au haut-parleur (2) par un fil unique (9) en utilisant un code différent pour chaque fonction.

8. Sirène électronique à fonctions multiples selon la revendication 6, **caractérisée en ce que** le fil unique est le fil (7) d'alimentation positive.
